# EUROPÄISCHE PATENTSCHRIFT

(11) **EP 0 632 275 B1**
(45) Veröffentlichungstag und Bekanntmachung des Hinweises auf die Patenterteilung: **22.10.1997**
(21) Anmeldenummer: 94109604.2
(22) Anmeldetag: 22.06.1994
(51) Int. Cl.: G01P 15/00

(54) **Halter für Beschleunigungssensoren**
Support for accelerometers
Support pour accéléromètres

(30) Priorität: 03.07.1993 DE 9309918 U
(43) Veröffentlichungstag der Anmeldung: 04.01.1995
(73) Patentinhaber: Mannesmann VDO AG, 60326 Frankfurt (DE)
(72) Erfinder: Hautvast, Heinz-Josef, Dipl.-Ing. (FH), D-78086 Villingen-Schwenningen (DE)

(56) Entgegenhaltungen:
- DE-U- 9 113 744
- US-A- 5 012 316

## Beschreibung

Die Erfindung betrifft einen Halter für Beschleunigungssensoren, welche in mikromechanischer Strukturtechnik hergestellt und für die Erfassung von Längs- und Querbeschleunigungen eines Fahrzeuges vorgesehen sind.

Bei derartigen Sensoren wird die Beschleunigungsmessung auf eine kapazitive Abstandsmessung zwischen einer oder zwei feststehenden Elektroden und einer beweglichen Elektrode, die einer aus einem Siliziumsubstrat schwingungsfähig herausstrukturierten Masse zugeordnet ist, zurückgeführt. Dieses Meßprinzip zeichnet sich bekanntlich durch eine hohe Empfindlichkeit aus, wobei durch Anwendung des Differentialmeßverfahrens, z. B. temperaturbedingte Meßfehler durch Eigenkompensation eliminierbar sind und eine zufriedenstellende Linearität erzielt wird.

Die mikromechanische Herstellung setzt selbstverständlicherweise einen hohen Bedarf voraus und legt es nahe auch die Montage eines mit den Sensoren gebildeten vorzugsweise in einem Datenerfassungsgerät integrierten mehrachsigen Beschleunigungsgeber weitgehendst unter Großserienbedingungen vorzunehmen. Eine derartige Äquivalenz zwischen der mikromechanischen Herstellung der Beschleunigungssensoren und deren Weiterverarbeitung erfordert einerseits den Einsatz moderner Bestückungs- und Löttechniken andererseits Vorkehrungen zur Aufnahme der Sensoren, die die Anwendung solcher Techniken ermöglichen und ihrerseits seriengerecht ausbildbar sind.

Bei diesen Vorkehrungen handelt es sich im wesentlichen darum die für eine Leiterplattenbestückung an sich untauglichen Sensoren derart zu ergänzen, daß sie auf einfache Weise, d. h. im Zuge der Bestückung einer Leiterplatte mit den ihnen zugeordneten Leiterbahnen der Leiterplatte elektrisch leitend verbindbar sind und bezüglich der orthogonalen Zuordnung der Sensoren zueinander und zu einer am Einbauort des Gerätes beispielsweise horizontal auszurichtenden Montageebene Justierarbeit vermieden ist.

Bekannte Halter mit mehreren Bestückungsflächen sind in US-A-5 012 316 und DE-U-91 13 744 offenbart.

Aufgabe der vorliegenden Erfindung war es daher, einen Halter zu schaffen, der auf einfache Weise die Aufnahme und die gegenseitige räumliche Zuordnung von mikromechanisch hergestellten Beschleunigungssensoren ermöglicht, sich für eine maschinelle Leiterplattenbestückung eignet und seinerseits unter Großserienbedingungen herstellbar ist.

Die Lösung dieser Aufgabe geht aus dem Anspruch 1 hervor. Vorteilhafte Ausführungsvarianten sind in den abhängigen Ansprüchen beschrieben.

Mit der vorgeschlagenen Ausbildung eines für die Aufnahme mehrerer Beschleunigungssensoren geeigneten Halters lassen sich die eingangs gestellten Forderungen zufriedenstellend erfüllen, insbesondere ermöglicht der erfindungsgemäße Halter eine großseriengerechte Montage und Kontaktierung zwischen mikromechnisch hergestellten Sensoren und einer Leiterplatte. Die spritzgußtechnische oder durch thermoplastische Verformung erfolgende Herstellung des Halters bei gleichzeitiger Nutzung einer dreidimensionalen Leiterbahnausbildung schafft außerdem die Voraussetzungen für eine Nutzenfertigung eines für die Leiterplattenbestückung geeigneten Halters, der unmittelbar auf einer Leiterplatte befestigt und und mit Leiterbahnen der Leiterplatte kontaktiert werden kann. Auf diese Weise lassen sich die für die Herstellung eines Beschleunigungsgebers erforderlichen Arbeitsgänge auf ein Minimum reduzieren und ein mehrachsiger Beschleunigungsgeber unter Vermeidung einer Vorproduktstufe mit einem prüffähigen Ausbau in möglicherweise handelsfähiger gegebenenfalls gekapselter Ausführung auf einer Leiterplatte eines Datenerfassungsgerätes zusammen mit anderen Funktionseinheiten mit sehr geringem Raumbedarf integrieren. Diese Integration bedeutet außerdem eine bessere Raumnutzung sowie Wahlfreiheit bezüglich der dem Beschleunigungsgeber zugeordneten Signalaufbereitungsschaltung.

Die für die Serienherstellung der Halter vorgeschlagene Nutzengestaltung gewährleistet jeweils eine gute Zugänglichkeit zu den Bestückungsflächen und ein problemloses Vereinzeln der Halter bei geringem Materialverlust. Dabei ist der Werkzeugaufwand für die vorgeschlagenen Nutzen vertretbar, auch wenn die erforderliche absolut rechtwinklige Ausbildung der den Sensoren zugeordneten Bestückungsflächen mittels Schiebern quer zur Hauptentformungsrichtung hergestellt werden muß.

Im folgenden sei die Erfindung anhand der beigefügten Zeichnungen näher erläutert
Es zeigen:
Fig. 1 eine Seitenansicht eines ersten Ausführungsbeispiels eines für die Aufnahme von zwei Beschleunigungssensoren ausgebildeteten Halters,
Fig. 2 eine Draufsicht des Halters gemäß Fig, 1.
Fig. 3 eine Nutzengestaltung für die Herstellung des Halters gemäß den Fig. 1 und 2,
Fig. 4 eine Abwicklung eines weiteren Ausführungsbeispiels des Halters mit aufgebrachten Leiterbahnen,
Fig. 5 eine Draufsicht eines teilweise dargestellten Nutzens zur Herstellung von Haltern gemäß Fig. 4,
Fig. 6 eine mit einem Teilschnitt versehene Seitenansicht des Nutzens gemäß Fig. 5,

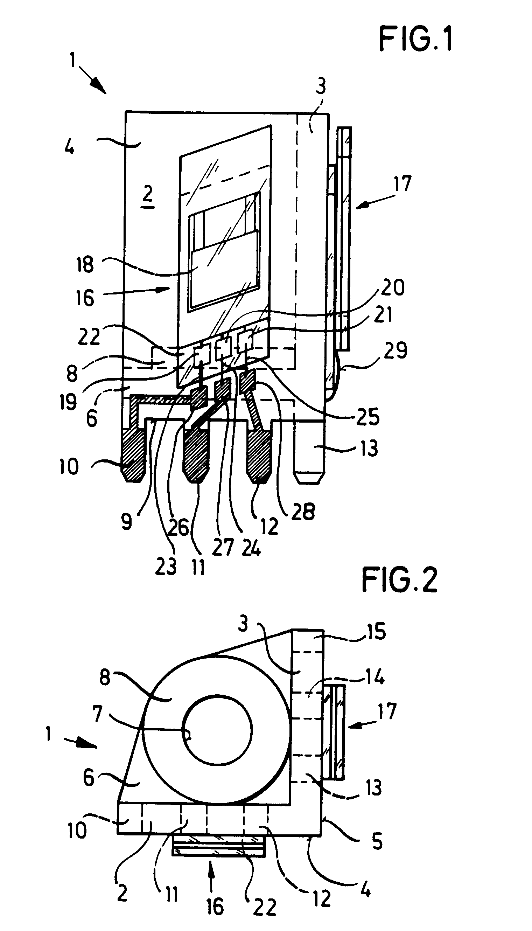

Der in den Fig. 1 und 2 dargestellte Halter 1 besteht im wesentlichen aus zwei Wänden 2 und 3, an denen rechtwinklig zueinanderstehende Bestückungsflächen 4 und 5 ausgebildet sind sowie einer die Wände 2 und 3 versteifenden Zwischenwand 6 mit einem einer Durchgangsbohrung 7 zugeordneten Auge 8 und einer rechtwinklig zu den Bestückungsflächen 4 und 5 angeformten Stützfläche 9. Ferner sind an beiden Wänden 2 und 3 stirnseitig Zapfen 10, 11, 12 und 13, 14, 15 in ein und dieselbe Richtung weisend angeformt. Im dargestellten Ausführungsbeispiel sind die Zapfen mit einem quadratischen Querschnitt ausgebildet. Die spritzgußtechnische Herstellung des Halters gestattet aber auch einen kreisförmigen Querschnitt. Bei diesem Ausführungsbeispiel des Halters 1 bietet sich für die Herstellung der leitenden Flächen die Zwei-Schuß-Spritzgußtechnik an, bei der die leitenden Flächen bei Verwendung geeigneter Kunststoffe lediglich durch Spritzgießen und Galvanisieren hergestellt werden.

Wie außerdem aus den Fig. 1 und 2 hervorgeht, sind an dem Halter 1 mikromechanische Beschleunigungssensoren 16 und 17 vorzugsweise durch Kleben auf den Bestückungsflächen 4 und 5 befestigt. Die vorzugsweise als Differentialkondensatoren ausgebildeten Sensoren 16 und 17 stellen jeweils ein Glas-Silizium-Glas-Schichtpaket dar, bei dem das kräftesensierende Element als Biegeschwinger 18 aus der Siliziumschicht herausstrukturiert ist. Mit 19, 20, 21 sind in vorteilhafter Weise gleichflächig auf einer Glasschicht 22 des Beschleunigungssensors 16 nebeneinander angeordnete, den nicht dargestellten Elektroden des Beschleunigungssensors 16 zugeordnete Anschlußkontakte bezeichnet. Diese sind mittels angebondeter Drähte 23, 24, 25 mit Kontakten 26, 27, 28 der nicht näher bezeichneten Leiterstrukturen des Halters 1 verbunden. Mit 29 ist ein Bonddraht bezeichnet, der mit zwei weiteren in gleicher Weise den Beschleunigungssensor 17 mit dem Halter 1 elektrisch verbindet.

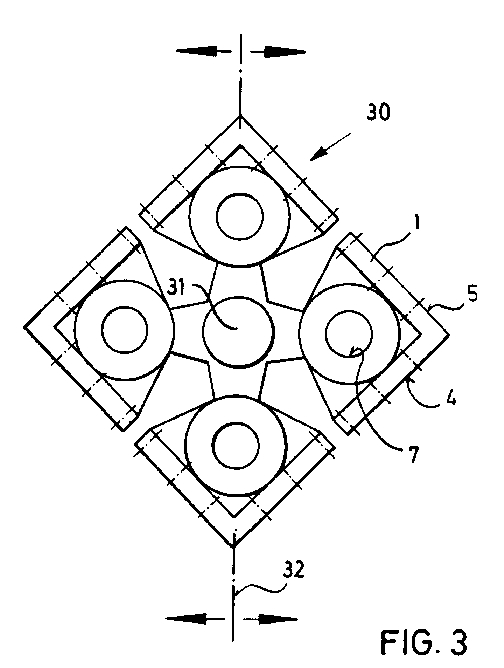

Die Fig. 3 zeigt eine Anordnung mehrerer Halter 1 im Nutzen und zwar derart, daß die jeweiligen Bestückungsflächen 4, 5 ungehindert zugänglich sind. Bei der dargestellten von vier Haltern 1 gebildeten Abgußspinne 30 kann der Anguß 31 derart gestaltet werden, daß mehrere Abgußspinnen übereinander gestapelt werden können. Auf diese Weise ist ein rationelles Bestücken der einzelnen Halter 1 mit Beschleunigungssensoren 16 und 17 sowie ein seriengerechtes Herstellen der Bondverbindungen erzielbar. Vorzugsweise werden die Abgußspinnen 30 in einer mit Aufnahmebolzen versehenen Vorrichtung über die Durchgangsbohrungen 7 gehaltert. Die mit 32 bezeichnete strichpunktierte Linie soll die Formtrennebene der die Bestückungsflächen bildenden und quer zur Hauptentformungsrichtung bewegbaren Schieber kennzeichnen.

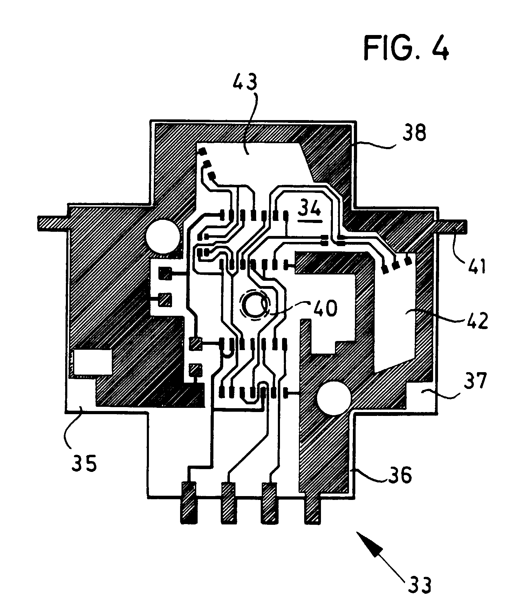

Die Abwicklung Fig. 4 zeigt ein weiteres Ausführungsbeispiel eines Halters 33, der kasten- oder kappenförmig ausgebildet ist und an dessen Deckel 34 vier Wände 35, 36, 37, 38 angeformt sind derart, daß wenigstens zwei Wände absolut rechtwinklig zueinander und zur Auflage bzw. Stützfläche des Halters 33 ausgebildet sind. Als Stützfläche dient, um mechanische Spannungen zu vermeiden, die Stirnfläche 39 einer Buchse 40, welche zum Durchführen einer Schraube vorgesehen ist. Die nicht dargestellte Schraube dient ihrerseits zum Fixieren des kastenförmigen Halters 33 auf einer Leiterplatte bevor die endgültige Befestigung durch Verlöten der an den Wänden (35, 36, 37) angeformten Kontaktfinger in in der betreffenden Leiterplatte ausgebildeten Öffnungen erfolgt. Ein Kontaktfinger ist mit 41 bezeichnet.

Bei dem Ausführungsbeispiel, das die Abwicklung Fig. 4 zeigt, kann die zusätzlich durch den Deckel 34 sich ergebende Bestückungsfläche entweder mit einem dritten Beschleunigungssensor oder mit elektrischen Bauteilen einer Signalaufbereitungs- und Anpasschaltung bestückt werden. Das in Fig. 4 dargestellte Leitungsnetzwerk ist für eine Kontaktierung zweier elektronischer Bausteine mit mehreren Gattern, zweier Kondensatoren und zweier Widerstände sowie zweier Beschleunigungssensoren ausgelegt. Die auf den Wänden 37 und 38 befindlichen freigeätzten Klebeflächen für die Beschleunigungssensoren sind mit 42 und 43 bezeichnet.

Der Vollständigkeit halber sei noch erwähnt, daß das Leitungsnetzwerk bei diesem Ausführungsbeispiel aufgrund der wegen der Kleinheit des Bauteils erforderlichen Feinleitertechnik mittels eines fotochemischen Prozesses aufgebracht werden muß.

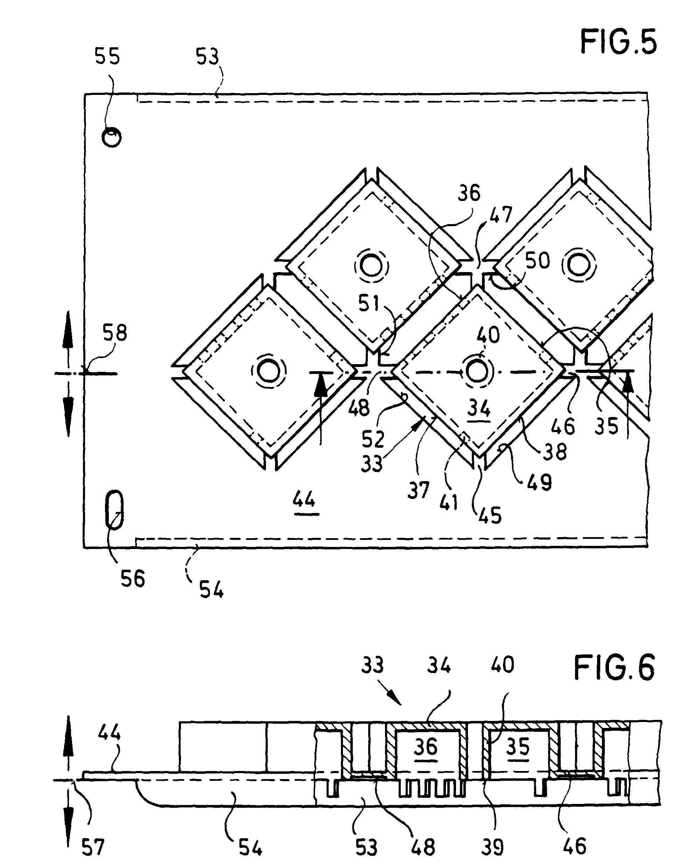

Mit den Fig. 5 und 6 ist ein Ausführungsbeispiel zur Herstellung des Halters 33 im Nutzen dargestellt. Dabei sind die Halter 33 paarweise parallel und jeweils um eine Länge eines Halters 33 gegeneinander versetzt an einer Nutzenplatte 44 ausgeformt. Dadurch wird erreicht, daß die Wände 37 und 38 eines jeden Halters 33 mit hoher Genauigkeit rechtwinklig zueinander und zur Ebene der Stützfläche 39 bzw. zur Oberfläche des Deckels 34 ausgebildet werden können, d. h. ein freier Zugang zu den Flächen besteht. Im Nutzenverband sind die einzelnen Halter 33 jeweils über an den jeweiligen Eckverschneidungen der Wände 35, 36, 37 und 38 ausgebildete Stege 45, 46, 47 und 48 mit der Nutzenplatte 44 verbunden. Die Stege 45, 46, 47 und 48 werden durch Ausformen von Durchbrüchen 49, 50, 51, 52 gebildet und können auf einfache Weise durch Stanzen entfernt werden.

An der Nutzenplatte 44 angeformte Leisten 53, 54 dienen der Versteifung der Nutzenplatte 44, mit 55 und 56 sind Öffnungen zur Aufnahme bzw. Befestigung der Nutzenplatte 44 für die nach dem Spritzgießen erfolgende Nutzenbearbeitung bezeichnet.Von den strichpunktierten Linien symbolisiert 57 die Hauptformtrennungsebene, 58 die Trennungsebene von Schiebern, die für die Herstellung der Wände 37 und 38 der Halter 33 vorgesehen sind. Erwähnenswert ist ferner, daß der Abfall bei der Nutzenherstellung erheblich reduziert werden kann, wenn der Rand der Nutzenplatte 44 wenigstens teilweise und soweit die Stabilität dies zuläßt, entsprechend der durch die Ausbildung der Halter gegebenen zickzackförmigen Kontur ausgebildet wird.

## Patentansprüche

1. Halter für Beschleunigungssensoren, welche in mikromechanischer Strukturtechnik hergestellt und für die Erfassung von Längs- und Querbeschleunigungen eines Fahrzeuges vorgesehen sind
dadurch gekennzeichnet,
daß der Halter (1) spritzgußtechnisch als dreidimensionaler Schaltungsträger derart ausgebildet ist, daß wenigstens zwei sich unter einem rechten Winkel schneidende Bestückungsflächen (4, 5) ausgebildet sind,
daß die Bestückungsflächen (4, 5) mit Kontakten (26, 27, 28) versehen sind und
daß in ein und dieselbe Richtung weisende Zapfen (10 bis 15) derart angeformt sind, daß sie in Bezug auf eine Ebene, zu der zwei Bestückungsflächen (4, 5) einen rechten Winkel bilden, rechtwinklig ausgebildet sind, und daß die Zapfen (10 bis 15) in elektrisch leitender Verbindung mit den Kontakten (26, 27, 28) der Bestückungsflächen (4, 5) stehen.

2. Halter nach Anspruch 1,
dadurch gekennzeichnet,
daß die Bestückungsflächen (4, 5) zu an zwei rechtwinklig zueinander stehenden Wänden (2, 3) ausgebildet sind, und
daß eine dritte Wand (6) vorgesehen ist, an welcher rechtwinklig zu den Bestückungsflächen (4, 5) eine Stützfläche (9) angeformt ist.

3. Halter nach Anspruch 1
dadurch gekennzeichnet,
daß er kastenförmig (33) derart geformt ist, daß wenigstens an zwei Wänden (37, 38) rechtwinklig zueinander stehende Bestückungsflächen, die ihrerseits zu einer Stützfläche (39) des Halters (33) im rechten Winkel stehen, ausgebildet sind.

4. Nutzen mit mehreren Haltern nach Anspruch 1,
dadurch gekennzeichnet,
daß der Nutzen in einer Mehrfachform derart hergestellt ist, daß die Bestückungsflächen jedes einzelnen Halters (1, 33) im Nutzenverband wenigstens zur Aufbringung von Leiterbahnen zugänglich sind.

5. Nutzen nach Anspruch 4,
dadurch gekennzeichnet,
daß mehrere Halter (33) paarweise parallel und jeweils um die Länge eines Halters (33) gegeneinander versetzt, an einer Nutzenplatte (44) ausgeformt sind und mit der Nutzenplatte (44) über vorzugsweise an den Ecken vorgesehene Stege (45, 46, 47, 48) in Verbindung stehen.

6. Nutzen nach Anspruch 4,
dadurch gekennzeichnet,
daß vorzugsweise vier Halter (1) einander derart zugeordnet sind, daß jeweils eine Bestückungsfläche zweier Halter (1) in einer Ebene liegen und daß ein zentraler Anguß (31) vorgesehen ist, mit welchem die Halter (1) über Stege in Verbindung stehen.

## Claims

1. Holder for acceleration sensors which are produced by the micromechanical structure technique and intended for the detection of longitudinal and transverse accelerations of a vehicle, characterised in that the holder (1) is formed by injection moulding as a three-dimensional circuit carrier in such a way that at least two mounting surfaces (4, 5) intersecting at a right angle are formed, in that the mounting surfaces (4, 5) are equipped with contacts (26, 27, 28), and in that projections (10 to 15) pointing in one and the same direction are moulded on in such a way that they are formed at right angles with respect to a plane relative to which two mounting surfaces (4, 5) form a right angle, and in that the projections (10 to 15) are electroconductively connected to the contacts (26, 27, 28) of the mounting surfaces (4, 5).

2. Holder according to Claim 1, characterised in that the mounting surfaces (4, 5) are formed to [sic] on two walls (2, 3) situated at right angles to one another, and in that a third wall (6) is provided, onto which a supporting surface (9) is moulded at right angles to the mounting surfaces (4, 5).

3. Holder according to Claim 1, characterised in that it is moulded in the shape of a box (33) in such a way that mounting surfaces situated at right angles to one another are formed at least on two walls (37, 38), the mounting surfaces in turn being situated at right angles to a supporting surface (39) of the holder (33).

4. Panel having a plurality of holders according to Claim 1, characterised in that the panel is produced in a multi-impression mould in such a way that the mounting surfaces of each individual holder (1, 33) in the interconnected panel structure are accessible at least for the deposition of conductor tracks.

5. Panel according to Claim 4, characterised in that a plurality of holders (33) are formed on a panel board (44) in parallel pairs each offset from one another by the length of a holder (33) and are connected to the panel board (44) via webs (45, 46, 47, 48) preferably provided at the corners.

6. Panel according to Claim 4, characterised in that preferably four holders (1) are assigned to one another in such a way that respectively one mounting surface of two holders (1) lie in one plane, and in that a central sprue (31) is provided, to which the holders (1) are connected via webs.

## Revendications

1. Supports pour des capteurs d'accélération qui sont fabriqués en technique de structure micromécanique et prévus pour l'acquisition d'accélérations longitudinales et transversales d'un véhicule,
caractérisés par le fait
que le support (1) est réalisé, en technique de moulage par injection, comme support de circuit tridimensionnel de telle sorte qu'il en résulte au moins deux surfaces d'équipement (4, 5) se coupant selon un angle droit, que lesdites surfaces d'équipement (4, 5) sont pourvues de contacts (26, 27, 28) et
que des tenons (10 à 15) orientés dans une seule et même direction sont moulés de telle sorte qu'ils soient perpendiculaires par rapport à un plan auquel deux surfaces d'équipement (4, 5) forment un angle droit et que lesdits tenons (10 à 15) communiquent, dans une liaison électriquement conductrice, avec lesdits contacts (26, 27, 28) desdites surfaces d'équipement (4, 5).

2. Support selon la revendication 1,
caractérisé par le fait
que les surfaces d'équipement (4, 5) sont réalisées sur deux parois (2, 3) dressées perpendiculairement l'une par rapport à l'autre et
qu'il est prévu une troisième paroi (6) sur laquelle est moulée, perpendiculairement auxdites surfaces d'équipement (4, 5), une surface d'appui (9).

3. Support selon la revendication 1,
caractérisé par le fait
qu'il est réalisé en forme de boîte (33) de telle sorte qu'il soit formé, au moins sur deux parois (37, 38), des surfaces d'équipement dressées perpendiculairement l'une par rapport à l'autre qui, pour leur part, sont placées en angle droit par rapport à une surface d'appui (39) du support (33).

4. Flan avec plusieurs supports selon la revendication 1,
caractérisé par le fait
que le flan est fabriqué dans un moule à plusieurs empreintes, de telle sorte que les surfaces d'équipement de chaque support (1, 33) dans l'assemblage de flan soient accessibles au moins pour l'application de pistes conductrices.

5. Flan selon la revendication 4,
caractérisé par le fait
que plusieurs supports (33) sont moulés, en paires parallèles et respectivement décalés les uns par rapport aux autres de la longueur d'un support (33), sur une plaque de flan (44) et communiquent avec ladite plaque de flan (44) par l'intermédiaire de traverses (45, 46, 47, 48) prévues, de préférence, aux coins.

6. Flan selon la revendication 4,
caractérisé par le fait
que, de préférence, quatre supports (1) sont associés les uns aux autres de telle sorte que respectivement une surface d'équipement de deux supports (1) soient situées dans un plan et qu'il est prévu un culot d'injection central (31) avec lequel les supports (1) communiquent par l'intermédiaire de traverses.
